# EUROPÄISCHE PATENTSCHRIFT

(11) **EP 0 844 120 B1**
(45) Veröffentlichungstag und Bekanntmachung des Hinweises auf die Patenterteilung: **26.11.2003**
(21) Anmeldenummer: 97116434.8
(22) Anmeldetag: 20.09.1997
(51) Int. Cl.: B60J 3/02

(54) **Sonnenblende für Fahrzeuge**
Sun visor for vehicles
Pare-soleil pour véhicules

(30) Priorität: 23.11.1996 DE 19648552
(43) Veröffentlichungstag der Anmeldung: 27.05.1998
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)
(74) Vertreter: Hemmelmann, Klaus

(56) Entgegenhaltungen:
- EP-A- 0 402 586
- EP-A- 0 414 132
- US-A- 4 858 983
- US-A- 5 365 416
- US-A- 5 580 118

## Beschreibung

Die Erfindung bezieht sich auf eine Sonnenblende für Fahrzeuge mit einem aus einer ersten Körperhälfte und einer zweiten Körperhälfte gebildeten Sonnenblendenkörper und einem zwischen den Körperhälften angeordneten Einlagekörper, wobei die Körperhälften Aufnahmevertiefungen für den Einlagekörper aufweisen und wobei der Einlagekörper mit einem Hauptlager für eine Hauptlagerachse, einer Gegenlagerachse sowie Halterungsmitteln für eine Rastfeder, einen Spiegel und elektrische Kontakt- und Schaltelemente ausgebildet ist.

Die Sonnenblendenkörper herkömmlicher Sonnenblenden weisen in der Regel einen darin eingelagerten Einlagekörper aus Metallblech, Draht, Kunststoff oder einer Metall-Kunststoff-Kombination auf. Die Einlagekörper dienen in erster Linie zur Aussteifung der Sonnenblendenkörper. Eine Sonnenblende der eingangs genannten Art ist beispielweise in dem nachveröffentlichen Dokument US 5 580 118 A gezeigt.

Die vorliegende Erfindung zielt auf die Schaffung eines, eine gewisse Eigenstabilität aufweisenden Sonnenblendenkörpers mit einem Einlagekörper ab, der für Sonnenblenden, die ohne oder mit einem Spiegel oder die ohne oder mit einem Schieber zum Abdecken des Spiegels oder die ohne oder mit einer Beleuchtungseinrichtung ausgerüstet sind, gleichermaßen geeignet sein soll.

Die Aufgabe wird erfindungsgemäß bei einer Sonnenblende mit den Merkmalen des Anspruchs 1 gelöst. Zweckmäßige Ausgestaltungen und vorteilhafte Weiterbildungen der Erfindung sind in den Unteransprüchen angegeben.

Ausführungsbeispiele der Erfindung werden im folgenden anhand der Zeichnungen näher erläutert, und es zeigen:
- Fig. 1: eine Sonnenblende in Ansicht,
- Fig. 2: die Hauptbestandteile der Sonnenblende nach Fig. 1 in einer Explosivdarstellung,
- Fig. 3: einen Schnitt A - A nach Fig. 2,
- Fig. 4: einen Schnitt B - B nach Fig. 2,
- Fig. 5: eine Einzelheit nach Fig. 2 in vergrößerter Darstellung,
- Fig. 6: eine Ausführungsform einer Sonnenblende mit aufgeklappt dargestelltem Sonnenblendenkörper,
- Fig. 7: einen mit Ergänzungselementen bestückten Einlagekörper der Sonnenblende nach Fig. 6 in einer Explosivdarstellung,
- Fig. 8: einen Schnitt C - C nach Fig. 7,
- Fig. 9: den Einlagekörper der Sonnenblende mit einer Abwandlung im Gegenlagerbereich,
- Fig. 10: einen ersten Ergänzungskörper für den Einlagekörper nach Fig. 9,
- Fig. 11: einen zweiten Ergänzungskörper für den Einlagekörper nach Fig. 9,
- Fig. 12: einen Schnitt F - F nach Fig. 11,
- Fig. 13: einen Schnitt G - G nach Fig. 11 und
- Fig. 14: einen dritten Ergänzungskörper für den Einlagekörper nach Fig. 9.

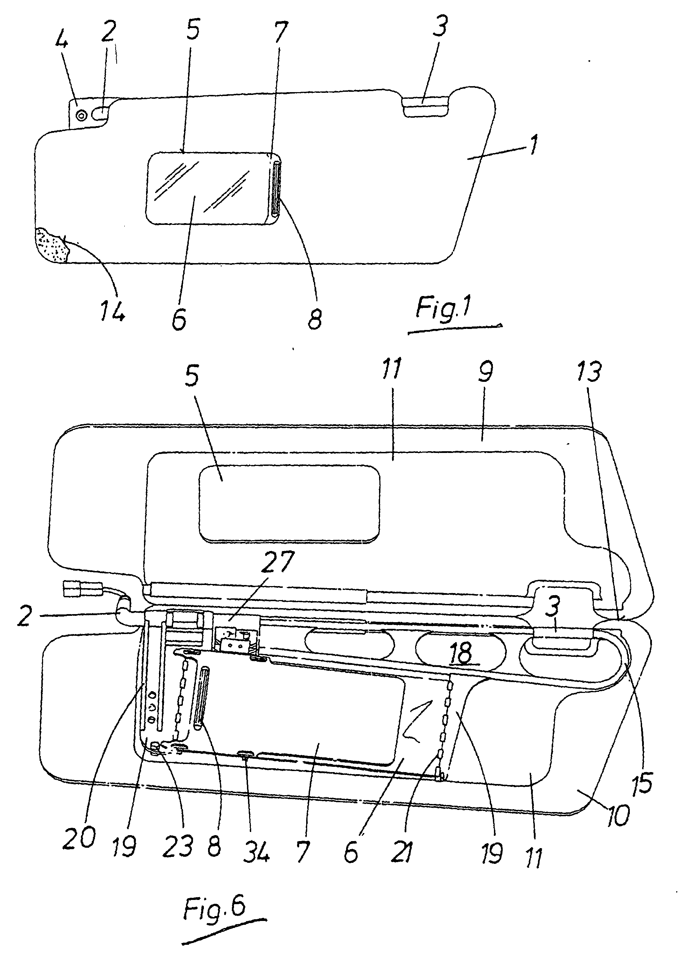

Die Sonnenblende nach Fig. 1 besteht aus einem Sonnenblendenkörper 1, der an einem Endbereich eine eingelagerte Hauptlagerachse 2 und am anderen Endbereich eine eingelagerte Gegenlagerachse 3 aufweist. Die Hauptlagerachse sitzt mit ihrem aus dem Sonnenblendenkörper 1 heraustretenden Ende in einem an der Fahrzeugkarosserie zu befestigenden Lagerböckchen 4. Die Gegenlagerachse 3 ist in die Lageraufnahme eines an der Fahrzeugkarosserie zu befestigenden nicht gezeigten Gegenlagerböckchen einrastbar. Der Sonnenblendenkörper 1 ist um eine durch die Hauptlagerachse 2 und Gegenlagerachse 3 gebildete parallel zur oberen Randkante des Sonnenblendenkörpers 1 verlaufenden Klappachse vor eine Windschutzscheibe klappbar bzw. bei Nichtgebrauch unter einen Dachhimmel klappbar.

Die Sonnenblende weist eine etwa rechteckig ausgebildete Öffnung 5 mit abgerundeten Ecken auf. Die Öffnung 5 legt einen Spiegel 6 frei, der bei Nichtgebrauch durch einen Schieber 7 abgedeckt werden kann. Zur einfachen Handhabung weist der Schieber 7 eine Griffleiste 8 auf.

Der Sonnenblendenkörper 1 ist in der Mittenebene getrennt und besteht aus zwei Körperhälften 9 und 10, die im gegeneinandergesetzten Zustand den Sonnenblendenkörper 1 bilden. Jede Körperhälfte 9 und 10 weist eine Aufnahmevertiefung 11 auf, die durch ein Prägeverfahren gebildet sein kann und im Boden der Aufnahmevertiefungen 11 sind kleinere Einprägungen 12 vorgesehen. Die Körperhälften 9 und 10 können separate Bauteile sein oder auch entlang einer Längskante über ein Filmscharnier 13 miteinander verbunden sein. Im zusammengefügten oder geklappten Zustand sind die Körperhälften 9 und 10 in geeigneter Weise aneinander festgelegt, z. B. durch Verklebung und/oder durch ein den Sonnenblendenkörper 1 umgebenes randverschweißtes Umhüllungsmaterial 14.

Die Aufnahmevertiefungen 11 nehmen einen Einlagekörper 15 auf, welcher aus einem vornehmlich aus PP (Polypropylen) bestehenden Kunststoffspritzling gebildet ist. Der Einlagekörper 15 ist im wesentlichen flach ausgeführt und für linke und rechte Sonnenblenden einsetzbar. Der Einlagekörper 15 umfaßt eine Schiene 16, die einen Gegenlagerbereich mit der Gegenlagerachse 3 ebenso einschließt, wie ein angeformtes Hauptlager 17, welches zur Lagerung der Hauptlagerachse 2 dient. Die Schiene 16 weist aus Material- und Gewichtseinsparungsgründen mehrere oval ausgeführte Durchbrüche 18 und insbesondere zwei einander beabstandete, etwa senkrecht von der Schiene 16 wegstrebende Stege 19 auf. An dem dem Hauptlager 17 benachbarten Steg 19 sind Stabilisierungsrippen 20 angeformt. Die einander zugewandten Randkanten der Stege 19 sind mit angeformten Zungen 21 ausgebildet, die zum einen mit Abstand in Reihe nebeneinander und zum anderen mit versetztem Abstand übereinander angeordnet sind und Aufnahmekanäle 22 bilden, die zur Halterung des darin einschiebbaren Spiegels 6 dienen. An den freien Endbereichen der Stege 19 sind Distanzbolzen 23 angeformt, die in die Einprägungen 12 der Körperhälften 9 und 10 eingreifen.

Das am Einlagekörper 15 angeformte Hauptlager 17 weist zwei einander beabstandete jedoch miteinander fluchtende Lageraugen 24 zur Lagerung eines Schenkels der L-förmig ausgebildeten Hauptlagerachse 2 auf. Die Lageraugen 24 sind über Stege 25 miteinander verbunden und die Stege 25 dienen zur Festlegung einer die Hauptlagerachse 2 klemmenden Rastfeder 26. An das Hauptlager 17 schließt sich ein Formkörper 27 mit einer nach oben offenen Kammer 28 an, deren Boden schlitzartige Öffnungen 19 aufweist. Unterhalb des Formkörpers 27 erstreckt sich unter Einhaltung eines Parallelabstands ein Verbindungssteg 30 mit daran senkrecht angeformten Zapfen 31.

Die soweit beschriebene Sonnenblende kann unter Einsatz des insoweit beschriebenen Einlagekörpers 15 ohne oder natürlich mit Spiegel 6 ausgerüstet sein. Die Sonnenblende kann fernerhin, wie bereits erwähnt, mit einem den Spiegel 6 bei Nichtgebrauch abdeckenden Schieber 7 versehen sein. Der Schieber 7 besteht aus einem Kunststoffspritzling mit jeweils zwei angeformten Federbügeln 32 an den beiden Längsseiten. Die Federbügel 32 besitzen angeformte, auf den Spiegellängsrändern sitzende Gleitnocken 33 und die Spiegellängsränder hintergreifende Haken 34. Damit vermag der Schieber 7 spielfrei auf den Spiegelkanten zu gleiten. Beim Schließen des Schiebers 7 stoßend die daran angeformten Nasen 35 gegen die vorderen, bereits erwähnten Distanzbolzen 23 während beim Öffnung des Schiebers 7 die daran zurückspringend angeformten Kanten 36 gegen die hinteren Distanzbolzen 23 stoßen. Die Distanzbolzen 23 dienen somit auch als Endanschläge für die Begrenzung der Öffnungs- und Schließbewegung des Schiebers 7.

Die Montagefolge bei der Herstellung einer Sonnenblende sieht vor, daß zunächst der Schieber 7 auf dem Spiegel 6 aufgeschoben und sodann der Spiegel 6 in die Aufnahmekanäle 22 der Stege 19 eingeschoben wird. Die Aufnahmekanäle 22 weisen beidendig hier nicht näher dargestellte Anschläge zur exakten Lagepositionierung des Spiegels 6 auf. Die an den freien Endbereichen der Stege 19 sitzenden Anschläge können durch leichtes Spreizen der Stege 19 mühelos überwunden werden. Der zuvor mit der Rastfeder 26 bestückte Einlagekörper wird sodann in eine Aufnahmevertiefung 11 einer der Körperhälften 9 oder 10 eingelegt und auf diese Körperhälfte wird dann die andere Körperhälfte 9 oder 10 aufgesetzt und mit der anderen verbunden, z. B. mittels des Umhüllungsmaterials 14 und/oder einer Verklebung.

Sonnenblenden werden häufig mit einer Beleuchtungseinrichtung kombiniert, um den Spiegel 6 auch bei Dunkelheit benutzen zu können. Die Beleuchtungseinrichtung kann innerhalb des Sonnenblendenkörper 1 oder auch extern, z. B. im Dachhimmel angeordnet sein. Im vorliegenden Fall wird von einer externen Beleuchtungseinrichtung ausgegangen, die über im Sonnenblendenkörper 1 bzw. am Einlagekörper 15 installierte Schaltmittel ein- und ausschaltbar ist.

Beim Ausführungsbeispiel nach Fig. 6 bis 8 erfolgt die Stromzuführung für die Schaltung der Beleuchtungseinrichtung durch eine durch die Hauptlagerachse 2 geführte Stromleitung 41, die zu zwei voneinander getrennten Polen 42 geführt ist. Die Pole 42 wirken mit zwei Kontaktbändern 43 zusammen, die versetzt gegenüberliegend (vgl. auch Fig. 8) in den erwähnten schlitzartigen Öffnungen 29 angeordnet sind. Die Kontaktbänder 43 wirken wiederum mit den Kontaktzungen eines Microschalters 44 zusammen, über den der Stromkreis geöffnet oder geschlossen wird. Im Normalfall ist der Stromkreis geschlossen, wenn sich der Sonnenblendenkörper in der Gebrauchslage befindet und geöffnet, wenn er sich in der Nichtgebrauchslage befindet.

Der Microschalter 44 sitzt auf den Zapfen 31, an denen er festgelegt ist und weist einen unterseitigen Schaltknopf 45 auf, welcher durch den Schieber 7 betätigbar ist.

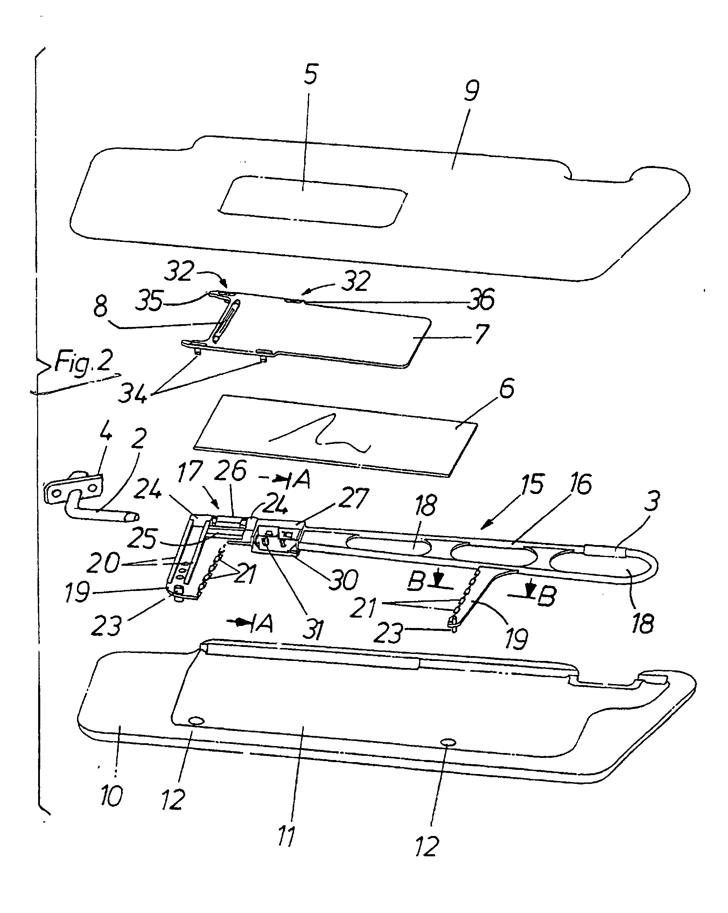

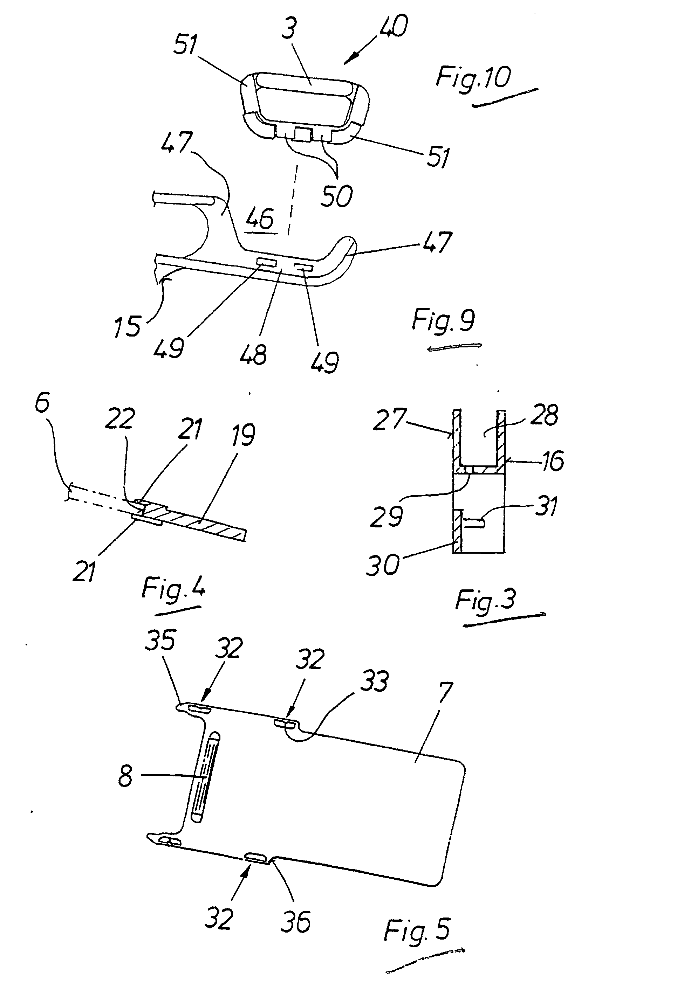

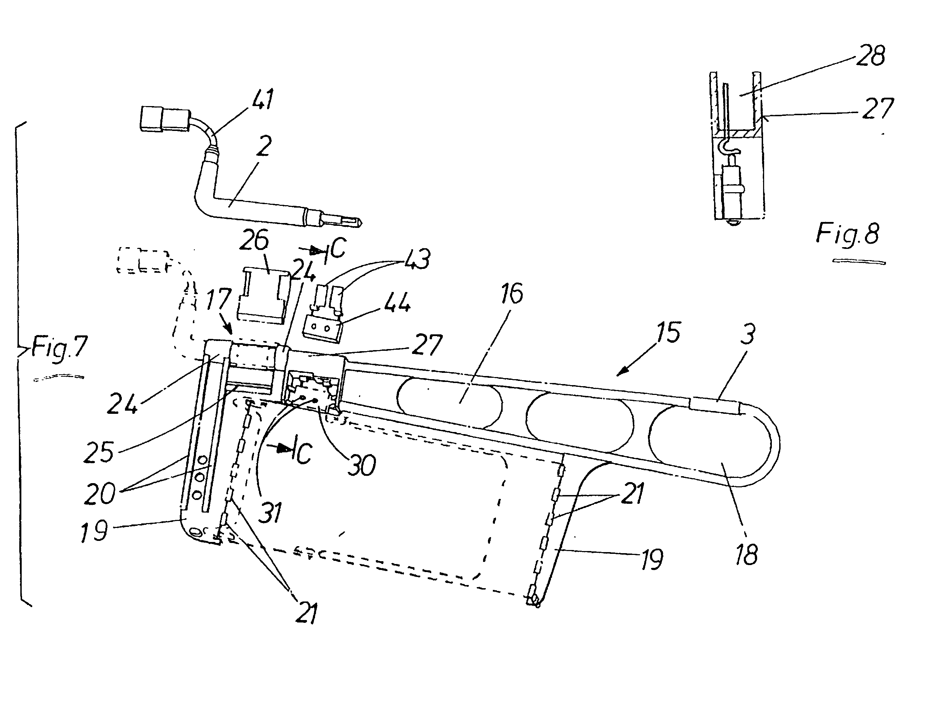

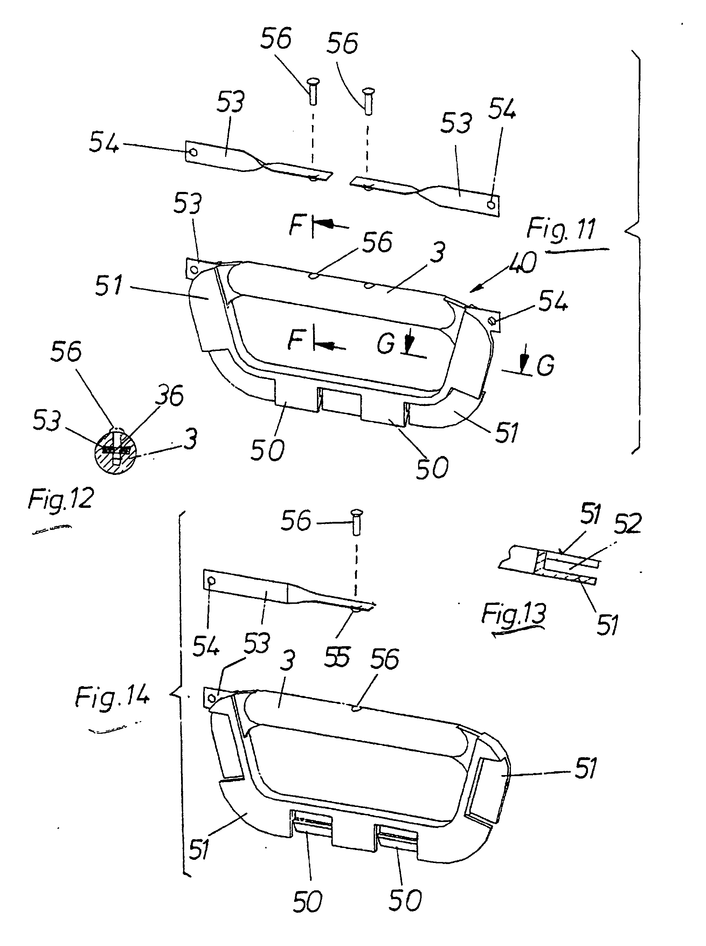

Beim Beispiel nach Fig. 6 bis 8 kommt der Einlagekörper 15 zum Einsatz, der auch beim Beispiel nach Fig. 1 bis 5 verwendet wird. Der Einlagekörper 15 nach Fig. 9 besitzt demgegenüber eine Abwandlung insofern, als die Gegenlagerachse 3 an einem separaten Formkörper 40 angeformt ist. Das gegenlagerseitige Ende des Einlagekörpers 15 nach Fig. 9 weist eine U-förmige Aufnahme 46 mit zwei Schenkeln 47 und einem Steg 48 auf. Im Steg 48 sind zwei Durchbrüche 49 vorgesehen, die zur Verrastung von am Formkörper 40 angebildeten Rastnasen 50 dienen. Der Formkörper 40 weist die daran einstückig angeformte Gegenlagerachse 3 auf. Im übrigen hat der Formköper 40 eine trapezartige Gestaltung, bestehend aus Wandungen 51, die entsprechend Fig. 13 entgegengesetzt angeordnet sind und einen Kanal 52 bilden, und zwar schon aus entformungstechnischen Gründen. Die gegenüberliegenden Wandungen 51 sind bereichsweise zwecks Anbindung der Rastnasen 50 unterbrochen. Der separate Formkörper 40 nach Fig. 10 bildet nach dem Aufklipsen auf den Einlagekörper 15 die Gegenlagerachse 3. Beim Beispiel nach Fig. 11 ist der Formkörper 40 dagegen mit zwei Kontaktstreifen 53 bestückt, an deren freien Endbereichen Durchgangslöcher 54 zum Anschluß und zur Verlötung von Leiterdrähten (nicht gezeigt) vorgesehen sind. Weitere Durchgangslöcher 55 dienen zum Eintreiben von Kontaktstiften 56, die mit Gegenkontakten im nichtgezeigten Gegenlagerböckchen kontaktieren. Die Kontaktstreifen 53 werden beim Spritzen des Formkörpers 40 in einfacher Weise umspritzt. Beim Beispiel nach Fig. 11 erfolgt die Stromzuführung ausschließlich über das Gegenlager, während beim Ausführungsbeispiel nach Fig. 14 ein Leiter über das Gegenlager und ein zweiter durch die Hauptlagerachse 2 geführt wird.

## Patentansprüche

1. Sonnenblende für Fahrzeuge mit einem aus einer ersten Körperhälfte (9) und einer zweiten Körperhälfte (10) gebildeten Sonnenblendenkörper (1) und einem zwischen den Körperhälften (9) und (10) angeordneten Einlagekörper (15), wobei die Körperhälften (9) und (10) Aufnahmevertiefungen (11) für den Einlagekörper (15) aufweisen und wobei der Einlagekörper (15) mit einem Hauptlager (17) für eine Hauptlagerachse (2), einer Gegenlagerachse (3) sowie Halterungsmitteln für eine Rastfeder (26), einen Spiegel (6) und elektrische Kontakt- und Schaltelemente ausgebildet ist, **dadurch gekennzeichnet, daß** der Einlagekörper (15) eine Schiene (16) aufweist, an der das Hauptlager (17) die Gegenlagerachse (3), ein Formkörper (27) und zwei etwa senkrecht wegstrebende Stege (19) angeordnet sind, daß das Hauptlager (17) zwei voneinander beabstandete Lageraugen (24) umfaßt, die über Stege (25) miteinander verbunden sind, wobei die Stege (25) zur Befestigungsanordnung der Rastfeder (26) dienen und daß die von der Schiene (16) wegstrebenden Stege (19) auf ihren einander zugewandten Seiten Zungen (21) aufweisen, die mit Abstand so nebeneinander und zueinander auf Lücke versetzt übereinander angeordnet sind, daß sie einen Aufnahmekanal (22) für den Spiegel (6) bilden.

2. Sonnenblende nach Anspruch 1, **dadurch gekennzeichnet, daß** dem Spiegel (6) ein Schieber (7) zugeordnet ist, der unmittelbar am Spiegel (6) gleitbeweglich angeordnet ist und aus einem Kunststoff-Spritzling mit jeweils zwei angeformten Federbügeln (32) an den beiden Längsseiten besteht, wobei die Federbügel (32) auf den Spiegellängsrändern sitzende Gleitnocken (33) und die Spiegellängsränder hintergreifende Haken (34) aufweisen.

3. Sonnenblende nach Anspruch 1 oder 2, **dadurch gekennzeichnet, daß** der Einlagekörper (15) durch einen separaten Formkörper (40) ergänzt ist, welcher die daran angeformte Gegenlagerachse (3) aufweist.

4. Sonnenblende nach Anspruch 1, 2 oder 3, **dadurch gekennzeichnet, daß** der separate Formkörper (40) mit darin eingelagerten elektrischen Kontaktelementen (53, 56) ausgebildet ist.

## Claims

1. Sun visor for vehicles having a sun visor body (1) formed from a first body half (9) and a second body half (10), and an insert body (15) arranged between the body halves (9) and (10), the body halves (9) and (10) having receiving depressions (11) for the insert body (15), and the insert body (15) being formed with a main bearing (17) for a main bearing spindle (2), a counterbearing spindle (3) and securing means for a latching spring (26), a mirror (6) and electric contact and switching elements, **characterized in that** the insert body (15) has a rail (16) on which the main bearing (17), the counterbearing spindle (3), a shaped body (27) and two webs (19) projecting away approximately vertically are arranged, **in that** the main bearing (17) has two spaced-apart bearing eyelets (24) which are connected to each other via webs (25), the webs (25) being used for the fastening arrangement of the latching spring (26), and **in that** the webs (19) projecting away from the rail (16) have tongues (21) on their mutually facing sides, said tongues being arranged at a distance next to one another and above one another offset with a gap in such a manner that they form a receiving channel (22) for the mirror (6).

2. Sun visor according to Claim 1, **characterized in that** the mirror (6) is assigned a slide (7) which is arranged directly on the mirror (6) in a slidable manner and consists of a plastic injection moulding with two spring clips (32) integrally formed in each case on the two longitudinal sides, the spring clips (32) having sliding cams (33) seated on the longitudinal edges of the mirror and hooks (34) gripping behind the longitudinal edges of the mirror.

3. Sun visor according to Claim 1 or 2, **characterized in that** the insert body (15) is supplemented by a separate shaped body (40) which has the counterbearing spindle (3) integrally formed on it.

4. Sun visor according to Claim 1, 2 or 3, **characterized in that** the separate shaped body (40) is formed with electric contact elements (53, 56) embedded in it.

## Revendications

1. Pare-soleil pour véhicules, comprenant un corps de pare-soleil (1) formé à partir d'une première moitié de corps (9) et d'une deuxième moitié de corps (10), et un corps intermédiaire (15) disposé entre les moitiés de corps (9) et (10), les moitiés de corps (9) et (10) présentant des renfoncements de réception (11) pour le corps intermédiaire (15) et le corps intermédiaire (15) étant réalisé avec un palier principal (17) pour un axe de palier principal (2), un axe de palier conjugué (3) ainsi que des moyens de fixation pour un ressort d'encliquetage (26), un miroir (6) et des éléments de contact et de commutation électriques, **caractérisé en ce que** le corps intermédiaire (15) présente un rail (16) sur lequel sont disposés le palier principal (17), l'axe de palier conjugué (3), un corps moulé (27) et deux ailes (19) s'éloignant approximativement perpendiculairement, **en ce que** le palier principal (17) comprend deux oeillets de palier (24) espacés l'un de l'autre qui sont connectés l'un à l'autre par des nervures (25), les nervures (25) servant à l'arrangement de fixation du ressort d'encliquetage (26) et **en ce que** les ailes (19) s'éloignant du rail (16) présentent, sur leurs côtés tournés l'un vers l'autre, des langues (21) qui sont disposées de manière espacée l'une à côté de l'autre et l'une vers l'autre de manière décalée l'une au-dessus de l'autre sur des espaces vides, qu'elles forment un canal de réception (22) pour le miroir (6).

2. Pare-soleil selon la revendication 1, **caractérisé en ce qu'**un coulisseau (7) est associé au miroir (6), lequel est disposé de manière à pouvoir coulisser directement sur le miroir (6) et se compose d'une pièce moulée par injection en plastique avec à chaque fois deux arceaux élastiques (32) formés sur celle-ci des deux côtés longitudinaux, les arceaux élastiques (32) présentant, sur les bords longitudinaux du miroir, des cames de glissement (33) et les bords longitudinaux du miroir présentant des crochets venant en prise par l'arrière (34).

3. Pare-soleil selon la revendication 1 ou 2, **caractérisé en ce que** le corps intermédiaire (15) est complété par un corps moulé séparé (40) qui présente l'axe de palier conjugué (3) formé sur celui-ci.

4. Pare-soleil selon la revendication 1, 2 ou 3, **caractérisé en ce que** le corps moulé séparé (40) est réalisé avec des éléments de contact électriques (53, 56) intégrés dans celui-ci.
